# FASCICULE DE BREVET EUROPEEN

(11) **EP 1 551 648 B1**
(45) Date de publication et mention de la délivrance du brevet: **13.02.2008**
(21) Numéro de dépôt: 03762651.2
(22) Date de dépôt: 08.07.2003
(51) Int. Cl.: B60B 21/10, B60B 21/00, B60B 21/12

(54) **JANTE DE ROUE CONSTITUEE DE DEUX STRUCTURES ASSEMBLEES**
AUS ZWEI MONTIERTEN KONSTRUKTIONEN BESTEHENDE RADFELGE
WHEEL RIM CONSISTING OF TWO ASSEMBLED STRUCTURES

(30) Priorité: 08.07.2002 FR 0208644
(43) Date de publication de la demande: 13.07.2005
(73) Titulaire: Société de Technologie Michelin, 63000 Clermont-Ferrand (FR); Michelin Recherche et Technique S.A., 1763 Granges-Paccot (CH)
(72) Inventeur: PIRIN, Georges, 63117 Chauriat (FR); BONNAMOUR, Matthieu, 63430 Pont du Chateau (FR); COGNE, Michael, 63200 Mozac (FR)
(74) Mandataire: Dequire, Philippe Jean-Marie Denis
(86) Numéro de dépôt international: PCT/EP2003/007289
(87) Numéro de publication internationale: WO 2004/005049

(56) Documents cités:
- WO-A-00/05083
- WO-A-01/08905
- FR-A- 2 805 214
- FR-A- 2 817 800

## Description

L'invention a pour objet une roue, composée d'un disque et d'une jante, pour pneumatique, et susceptible de former avec un anneau de soutien de la bande de roulement du pneumatique et le pneumatique un ensemble roulant pouvant être utile dans le cas de roulage où la pression de gonflage s'abaisse anormalement par rapport à la pression normale d'emploi, dite pression nominale de service, pression pouvant même devenir nulle.

Le document WO 00/05083 décrit dans l'exemple de réalisation de la figure 6 une jante de roue dont la géométrie radialement extérieure comporte un siège extérieur et un siège intérieur de jante, au moins le siège extérieur de jante ayant une génératrice dont l'extrémité axialement extérieure est sur un cercle de diamètre inférieur au diamètre du cercle sur lequel se trouve l'extrémité axialement intérieure, ledit siège extérieur de jante étant prolongé axialement à l'extérieur par une saillie ou hump de faible hauteur, et axialement à l'intérieur par un rebord, une portée d'appui sensiblement cylindrique de révolution pour recevoir un anneau de soutien de bande de roulement mis en place par enfilage axial de l'extérieur de la jante vers l'intérieur, une gorge de montage avec un flanc extérieur et un flanc intérieur, et dont la géométrie radialement intérieure a un diamètre qui n'augmente pas entre ladite gorge de montage et la zone de liaison à un disque. Cette jante de roue est constituée par l'assemblage d'une première structure métallique constituant la géométrie radialement intérieure de ladite jante ainsi qu'une partie de ladite géométrie radialement extérieure de ladite jante ; et d'une seconde structure destinée à constituer radialement extérieurement ladite portée d'appui. Cette jante est telle que ladite seconde structure est une virole métallique cylindrique de révolution en appui radialement extérieurement sur le rebord intérieur du siège extérieur et sur le flanc extérieur de la gorge de montage.

La jante de roue présentée par ce document a l'avantage de ne pas présenter, radialement intérieurement, de zone d'accumùlation en service de matières diverses. En revanche, la virole métallique qui constitue la seconde structure doit être mise en place autour de la première structure par enfilage du côté axialement extérieur de la jante vers le côté axialement intérieur puis soudage. Cela limite fortement sa géométrie et son intérêt.

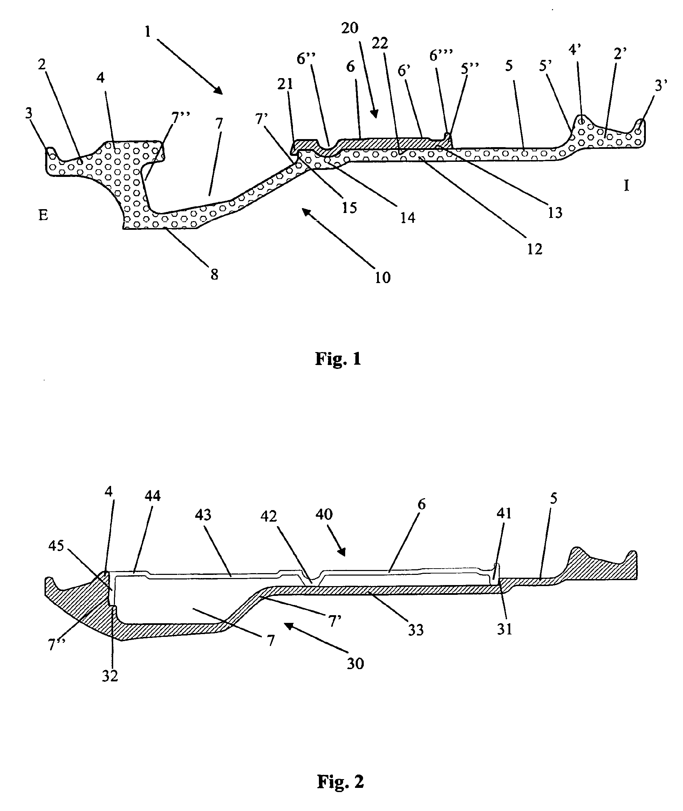

Dans ce qui suit, on entend par « côté axialement extérieur de la jante », le côté E destiné à être visible de l'extérieur du véhicule pour laquelle elle est destinée et par « côté axialement intérieur de la jante » le côté I destiné à être disposé vers l'intérieur du véhicule (voir Fig. 1).

Afin de permettre l'obtention d'une légèreté optimale et de remédier aux inconvénients ci-dessus, la jante de roue, conforme à l'invention, dont la géométrie radialement extérieure comporte un siège extérieur et un siège intérieur de jante, au moins le siège extérieur de jante ayant une génératrice dont l'extrémité axialement extérieure est sur un cercle de diamètre inférieur au diamètre du cercle sur lequel se trouve l'extrémité axialement intérieure, ledit siège extérieur de jante étant prolongé axialement à l'extérieur par une saillie ou hump de faible hauteur, et axialement à l'intérieur par un rebord, une portée d'appui sensiblement cylindrique de révolution pour recevoir un anneau de soutien de bande de roulement, et dont la géométrie radialement intérieure a un diamètre qui n'augmente pas entre ledit siège intérieur et la zone de liaison à un disque, est constituée par l'assemblage :
- d'une première structure métallique constituant la géométrie radialement intérieure de ladite jante ainsi qu'au moins une partie de la géométrie radialement extérieure de ladite jante ; et
- d'une seconde structure destinée à constituer radialement extérieurement ladite portée d'appui.
Cette jante de roue est caractérisée en ce que ladite seconde structure est constituée d'une pièce cylindrique et ouverte sur l'une des ses génératrices.

Cette pièce peut aisément être assemblée autour de la première structure grâce à son élancement et sa souplesse, sans dépasser la limite élastique de matériau constitutif, puis vient s'appuyer contre la paroi radialement extérieure de la première structure. Après mise en place de l'anneau de soutien de la bande de roulement, cette seconde structure est parfaitement tenue et stable.

De préférence, les lèvres de l'ouverture de cette seconde structure en forme d'anneau fendu sont inclinées en biais relativement à la direction axiale pour permettre un montage en hélice de cette seconde structure autour de la première structure.

L'invention a aussi pour objet une jante de roue similaire caractérisée en ce que ladite seconde structure est constituée par l'assemblage circonférentiel d'au moins deux éléments de support venant en appui sur la paroi radialement extérieure de ladite première structure métallique.

La seconde structure est ainsi assemblée directement autour de la première structure ce qui lui donne une grande liberté de conception.

De préférence, la portée d'appui constituée par la seconde structure comprend une gorge circonférentielle radialement extérieure destinée à bloquer axialement l'anneau de soutien. Cette gorge est particulièrement utile lorsque l'anneau de soutien a une largeur axiale limitée et lorsque sa partie axialement extérieure n'est pas en contact avec le rebord du siège extérieur. De tels ensembles anneaux de soutien, jantes de roue adaptées sont décrites dans le document WO 01/08905 A1.

Selon un mode de réalisation préférentiel, la paroi radialement intérieure de ladite première structure métallique comprend axialement extérieurement relativement au flanc intérieur de ladite gorge de montage une zone sensiblement cylindrique de révolution s'étendant axialement du flanc intérieur de ladite gorge de montage à l'extrémité extérieure de ladite portée d'appui.

De façon avantageuse, ladite seconde structure est alors une structure annulaire d'épaisseur sensiblement constante dont la paroi radialement intérieure est sensiblement cylindrique de révolution et dans laquelle l'ensemble de cette paroi radialement intérieure est en contact avec la paroi radialement extérieure de la première structure métallique.

Cette seconde structure peut alors être constituée d'un matériau de faible densité tel un thermoplastique non renforcé ou faiblement renforcé car les contraintes mécaniques qu'il subit en service lors d'un roulage à plat sont relativement faibles en raison de la très importante surface de contact avec la structure métallique.

Ladite seconde structure peut aussi comprendre en plus, au moins deux voiles circonférentiels s'étendant radialement intérieurement de ladite portée d'appui et servant d'appui contre la paroi radialement extérieure de ladite première structure métallique.

Le matériau de la seconde structure est alors de préférence sensiblement plus rigide, soit un thermoplastique renforcé de fibres de verre, ou un thermodurcissable ou encore un matériau métallique, tel une tôle d'acier ou d'aluminium.

La géométrie radialement extérieure de ladite première structure métallique peut comprendre un flanc extérieur de ladite gorge de montage, la seconde structure est alors bloquée axialement intérieurement par ledit flanc.

Alternativement, l'extrémité axialement intérieure de la seconde structure peut aussi constituer le flanc extérieur de ladite gorge de montage.

Selon un autre mode de réalisation, ladite zone sensiblement cylindrique de révolution de ladite première structure a, au niveau de ladite portée d'appui, un diamètre inférieur avec un décrochement placé au niveau de l'extrémité extérieure de la gorge de montage adapté pour bloquer axialement l'extrémité axialement intérieure de ladite seconde structure.

Cette géométrie a l'avantage de rigidifier la partie intérieure de la jante. Comme le diamètre de la paroi radialement extérieure de la seconde structure est plus petit, la seconde structure a alors des voiles circonférentiels plus importants, il est alors souhaitable d'utiliser un matériau de rigidité supérieure.

Pour bloquer axialement la seconde structure sur la première, on peut ménager dans la paroi de la première structure une gorge circonférentielle correspondant à celle de ladite zone cylindrique de révolution de ladite seconde structure.

Selon un troisième mode de réalisation, la première structure métallique présente, entre la gorge de montage et la zone de liaison au disque une paroi dont le diamètre axial diminue continûment.

Cette géométrie a l'avantage d'optimiser la masse et la résistance mécanique de cette première structure métallique. Il est alors nécessaire de concevoir la seconde structure avec des voiles circonférentiels d'appui en nombre et en rigidité adaptés aux contraintes qu'elle doit subir en service lors d'un roulage à plat.

On peut aussi bloquer axialement ladite seconde structure par des moyens de blocage prenant appui d'une part contre ledit flanc intérieur du rebord dudit siège extérieur de ladite première structure métallique et d'autre part contre un voile sensiblement circonférentiel de ladite seconde structure.

Ces moyens de blocage peuvent avantageusement être un système vis cône.

La seconde structure peut avantageusement comporter en plus une zone sensiblement cylindrique de révolution prolongeant axialement extérieurement ladite portée d'appui et adaptée pour coopérer avec le flanc intérieur du rebord du siège extérieur de ladite première structure métallique pour supporter ladite seconde structure et la bloquer axialement extérieurement.

Ce mode de réalisation a l'avantage de prolonger axialement intérieurement le rebord intérieur du siège extérieur, cela renforce le maintien du bourrelet sur le siège extérieur.

Pour faciliter la mise en place de l'anneau de soutien, il est alors souhaitable que la paroi extérieure de la zone cylindrique de révolution complémentaire de la seconde structure comprend une zone de diamètre inférieure au diamètre extérieur du rebord adjacent au siège extérieur. Cette zone de diamètre inférieur facilite l'enfilage de l'anneau sur sa portée d'appui en limitant les frottements entre la seconde structure et la paroi intérieure de l'anneau.

Avantageusement, la seconde structure peut être fixée autour de ladite première structure par des moyens complémentaires choisis dans le groupe des clips, soudures, colles.

L'invention a aussi pour objet un élément de support comportant des moyens d'assemblage destiné à constituer par assemblage d'au moins deux éléments une seconde structure.

De préférence les éléments de support sont tels que ladite seconde structure est constituée par l'assemblage de deux ou trois éléments de supports.

Les moyens d'assemblage peuvent être choisis dans le groupe des clips, systèmes mâle femelle, colles, soudures, vis écrous.

Le matériau constituant des éléments de support peut être choisi dans le groupe des résines thermodurcissables renforcées ou non, des résines thermoplastiques renforcées ou non, et des matériaux métalliques, tels les tôles d'acier ou d' aluminium.

Plusieurs modes de réalisation de l'invention sont maintenant décrits à titre non limitatif au moyen du dessin annexé dans lequel :
- la figure 1 représente schématiquement, vu en coupe radiale, une première jante de roue conforme à l'invention comportant une seconde structure très simple ;
- la figure 2 représente une seconde variante de jante de roue conforme à l'invention ;
- la figure 3 représente une troisième variante de jante de roue conforme à l'invention ;
- la figure 4 représente une jante de roue similaire à celle de la figure 1 avec une seconde structure incluant une liaison avec le rebord intérieur du siège extérieur ;
- la figure 5 présente une cinquième variante de roue conforme à l'invention avec une seconde structure en tôle d'aluminium ;
- la figure 6 représente une variante de jante de roue conforme à l'invention avec une première structure métallique en tôle d'acier ;
- la figure 7 représente, vu en coupe radiale, un agrandissement de la figure 1 incluant les moyens d'assemblage de la seconde structure ;
- la figure 8 représente la jante de roue de la figure 7, en coupe circonférentielle et avant l'assemblage autour de la première structure ;
- la figure 9 est similaire à la figure 8 après l'assemblage ;
- la figure 10 présente une jante de roue avec un système de blocage vis cône de la seconde structure sur la première ;
- la figure 11 présente une vue en coupe d'une jante de roue avec une seconde structure en forme d'anneau fendu ;
- la figure 12 présente la jante de roue de la figure 11 après montage d'un anneau de soutien de bande de roulement ; et
- la figure 13 présente un exemple de moyens d'assemblage d'une seconde structure en forme d'une anneau fendu.

La figure 1 présente un premier exemple de jante de roue 1 selon l'invention. Dans l'exemple présenté, cette jante est réalisée en alliage d'aluminium moulé. Cette jante de roue comprend deux sièges extérieur 2 et intérieur 2'. Le siège extérieur 2 se prolonge du côté extérieur de la jante par une saillie ou hump de faible hauteur 3 et du côté intérieur par un rebord 4. Le siège intérieur 2' se prolonge du côté intérieur par un hump 3' et extérieurement par un rebord 4'. Les deux sièges ont une inclinaison inverse de celle des jantes de roue usuelles. La jante 1 comprend aussi une gorge de montage 5 avec un flanc extérieur 5" et un flanc intérieur 5', une portée d'appui 6 destinée à recevoir un anneau de soutien d'une bande de roulement (non représenté) mis en place sur la portée d'appui 6 par enfilage du côté extérieur E de la jante vers le côté intérieur I de la jante. Il est à noter que le diamètre de la portée d'appui 6 doit ainsi être supérieur ou égal à celui du rebord 4 pour que cet enfilage soit possible. La portée d'appui comprend une gorge circonférentielle 6" destinée à coopérer avec une nervure adaptée ménagée dans la paroi intérieure de l'anneau de soutien pour bloquer axialement celui-ci après sa mise en place. Une saillie de blocage complémentaire 6"' se trouve aussi à l'extrémité intérieure de la portée 6. La jante de roue a encore une gorge d'allégement 7 avec un flanc extérieur 7' et un flanc intérieur 7" destinée à limiter la masse de la roue. Cette gorge 7 s'étend circonférentiellement entre le rebord 4 et la portée d'appui 6. Du côté radialement intérieur de la jante se trouve notamment la zone de liaison 8 à un disque non représenté. De telles jantes de roue sont présentées notamment dans le document WO 00/05083 précédemment cité.

La jante de roue 1 est constituée par l'assemblage d'une première structure métallique 10 et d'une seconde structure 20. La première structure 10 englobe les sièges intérieur 2' et extérieur 2, les humps 3 et 3', les rebords 4 et 4', la gorge d'allègement, une partie de la gorge de montage 5 et l'ensemble de la géométrie radialement intérieure de la jante de roue 1. La seconde structure 20 comprend la portée d'appui 6 avec la saillie de blocage 6"', la gorge 6" et la zone 6' de diamètre supérieur de la portée 6 ainsi que le flanc extérieur 5" de la gorge de montage 5.

Il est à noter que les première et seconde structures coopèrent à l'extrémité extérieure de la portée 6 pour bloquer axialement cette seconde structure au moyen d'un rabattement 21 venant en appui sur un flanc sensiblement vertical 15 de la première structure. Le blocage axial est complété par une gorge circonférentielle 14 ménagée en regard de la gorge 6" dans la première structure. La zone 12 de la première structure située entre la gorge de montage 5 et le flanc intérieur 7' de la gorge d'allègement, c'est-à-dire entre la gorge de montage 5 et l'ensemble de la zone radialement en regard de la portée d'appui 6 est sensiblement cylindrique de révolution. Il en résulte que l'épaisseur de la seconde structure est faible et peut être constituée d'un anneau assemblé d'éléments de support en matériau composite de faible rigidité tel un thermoplastique non renforcé ou faiblement renforcé. Comme les deux surfaces radialement extérieure 13 de la première structure et intérieure 22 de la seconde structure sont en contact sur leur ensemble, les efforts subis par cette seconde structure en service lors d'un roulage à plat sont de faible intensité.

La structure métallique 10 peut être réalisée en différents matériaux et par différentes technologies. Les matériaux les mieux adaptés à cette application pour des séries industrielles sont l'aluminium et l'acier. Les profils de cette structure métallique sont plus simples à réaliser que ceux des roues proposées dans la demande WO 01/08905. En particulier, la butée latérale de l'appui et la gorge circonférentielle servant à bloquer l'appui (clip) peuvent être intégrées à la seconde structure. De plus, le profil radialement intérieur de la première structure ne nécessite pas ou peu d'usinage et évite toute zone de rétention. Ainsi, la réalisation de cette première structure métallique est proche de celle d'une roue à profil standard. Dès lors, il est possible d'envisager une réduction du coût de la première structure par rapport au coût d'une roue de géométrie proche du type de celle présentée dans le document WO 01/08905.

Les éléments de support de la seconde structure peuvent être réalisés avec toutes sortes de matériaux. Néanmoins, l'élément support sera avantageusement réalisé en matériaux thermoplastiques ou thermodurcissables, renforcés ou non, ou encore en alliage d'aluminium. En effet, ces matériaux présentent des bons compromis entre la résistance, la densité, la faisabilité industrielle et le coût. En fonction du matériau choisi, de ses caractéristiques thermomécaniques et des contraintes procédé, des adaptations de formes peuvent être nécessaires.

La figure 2 présente un second ensemble d'une première structure 30 et d'une seconde structure 40 selon l'invention.

La première structure 30 se distingue de la précédente 10 par un décrochement 31 situé à l'extrémité extérieure de la gorge de montage 5. Ce décrochement implique que le diamètre de la zone cylindrique de révolution 33 disposée en regard de la portée d'appui 6 est inférieur à celui de la gorge de montage 5. En conséquence, apparaît sur la surface radialement extérieure de la première structure au niveau du décrochement 31 un flanc sensiblement vertical qui sert de butée axiale de blocage de la seconde structure 40. Il est aussi à noter que la liaison entre le flanc intérieur 7' de la gorge d'allègement 7 et la zone cylindrique de révolution 12 ne comporte pas de flanc vertical 15.

Le décrochement 31 entraîne un augmentation de la distance entre la paroi radialement extérieure 13 de la première structure et la portée d'appui 6. En conséquence, la seconde structure comprend deux voiles 41 et 42 circonférentiels s'étendant radialement entre la portée d'appui 6 et la paroi 13 pour servir d'appui à cette seconde structure 40. Le voile 42 s'étend à partir de la gorge circonférentielle 6". Le voile 41 est en appui axial contre le flanc vertical lié au décrochement 31. La seconde structure 40 présente aussi un prolongement sensiblement cylindrique de révolution 43 et 44 qui s'étend axialement extérieurement à partir de la portée d'appui 6 jusqu'au rebord 4. La partie 44 de ce prolongement a un diamètre sensiblement identique à celui du rebord 4 pour participer à la fonction anti-décoincement du bourrelet du pneumatique de ce rebord 4. Le flanc 7" extérieur de la gorge d'allègement 7 coopère avec un voile 45 à l'extrémité extérieure du prolongement 43 pour fixer axialement la seconde structure grâce à un épaulement axial 32. La partie axialement intérieure du prolongement 43 a de préférence un diamètre plus faible pour faciliter l'enfilage de l'anneau de soutien au-dessus du prolongement 43 en diminuant les efforts de frottement dus à cet enfilage.

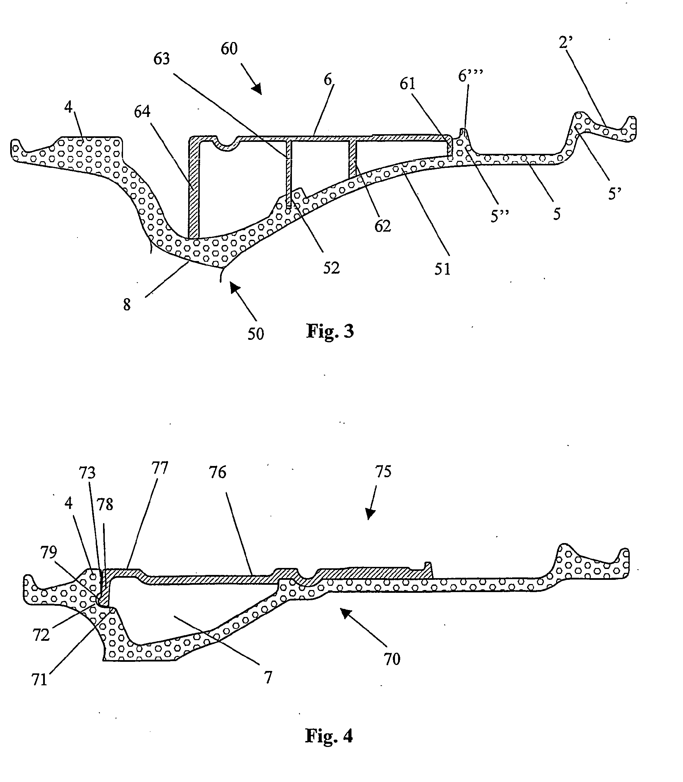

La figure 3 présente un troisième ensemble d'une première structure 50 et d'une seconde structure 60 selon l'invention.

La première structure 50 se distingue des deux précédentes par le fait que le diamètre de la zone 51 située entre le siège intérieur 2', et plus précisément l'extrémité extérieure de ce siège intérieur et la zone de liaison au disque 8 diminue continûment. Cela facilite la réalisation de cette première structure en en facilitant le démoulage et en limitant le nombre des séquences d'usinage. On note aussi que le flanc extérieur 5" de la gorge de montage 5 fait partie de cette première structure 50 et que ce flanc 5" comporte la saillie 6"' de blocage axial de l'anneau de soutien de bande de roulement.

La seconde structure 60 comprend une portée sensiblement cylindrique de révolution 6 en appui contre la paroi radialement extérieure de la zone 51 par l'intermédiaire de quatre voiles circonférentiels 61, 62, 63, 64 dont l'épaisseur est adaptée aux contraintes subies en service. Le voile 61 est en appui contre le flanc 5" de la première structure. Pour compléter le blocage de cette seconde structure 60 autour de la première 50, le voile 63 est enfilé dans une rainure de blocage 52 ménagée dans la paroi extérieure de la zone 51 de la première structure. Compte tenu de la hauteur des voiles circonférentiels de cette seconde structure, celle-ci est de préférence réalisée avec un matériau de rigidité élevée, par exemple un thermodurcissable rigide ou un thermoplastique renforcé de fibres de verre.

La figure 4 présente un quatrième ensemble d'une première structure métallique 70 et d'une seconde structure 75. La première structure métallique 70 est très proche de la structure métallique 10 de la figure 1. Elle se distingue seulement par le fait que le flanc extérieur de la gorge d'allègement 7 comprend un flanc radial 73 suivie d'une gorge 72 et d'un épaulement axial 71 pour servir d'appui et de butée à un voile extérieur 78 d'un prolongement 76-77 de la seconde structure 75 de la portée d'appui 6 jusqu'au rebord 4. Ce prolongement est similaire à celui 43-44 présenté à la figure 2. Le prolongement se termine axialement extérieurement par un voile 78 qui vient en appui sur l'épaulement axial 71. Le voile 78 comprend aussi une nervure 79 adaptée à la gorge 72 pour que, lors de la mise en place de la seconde structure autour de la première, il y ait un clipage de cette nervure 79 dans la gorge 72 ce qui renforce le maintien de cette seconde structure sur la première.

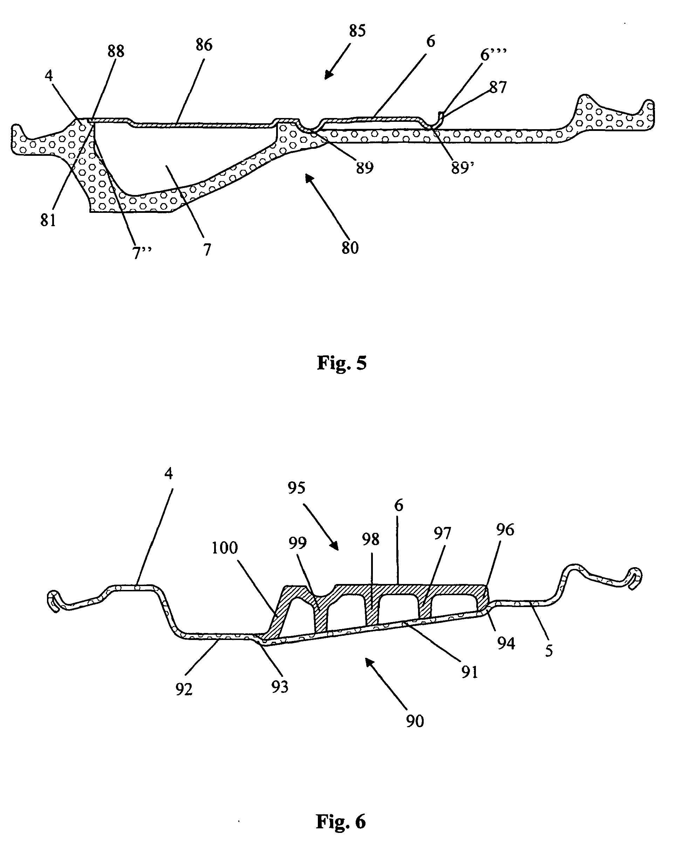

La figure 5 présente un cinquième exemple d'une jante de roue selon l'invention comprenant une première structure métallique 80 et une seconde structure 85. La première structure métallique 80 est très proche à nouveau de la structure métallique 10 de la figure 1. Elle se distingue seulement par le fait que le flanc 7" extérieur de la gorge d'allègement 7 comporte un épaulement axial 81 destiné à venir supporter l'extrémité extérieure 88 du prolongement extérieur 86 de la seconde structure 85. L'épaisseur radiale de l'épaulement est telle que la seconde structure prolonge intérieurement le rebord 4 avec le même diamètre. La seconde structure 85 est réalisée ici en un tôle métallique, d'acier ou d'aluminium. L'extrémité extérieure 88 vient en appui contre l'épaulement 81 et l'extrémité axialement intérieure 87 est recourbée en arc de cercle pour venir constituer le flanc extérieur 5" de la gorge de montage 5 ainsi que la saillie de blocage axial 6"' de l'anneau de soutien. Deux voiles 89 et 89' permettent d'adapter le diamètre extérieur de la seconde structure 85 au diamètre requis pour la portée d'appui 6. Le voile 89 est en forme de nervure coopérant avec une nervure ménagée dans la première structure pour compléter le blocage axial de la seconde structure.

Les éléments de support de la seconde structure seront avantageusement réalisés en tôle d'aluminium afin d'obtenir le meilleur compromis masse/faisabilité industrielle.

La figure 6 présente un sixième exemple d'une jante de roue selon l'invention comprenant une première structure métallique 90 et une seconde structure 95. La première structure métallique 90 est constituée d'une tôle métallique, d'acier ou d'aluminium d'épaisseur sensiblement constante. Un disque, non représenté, doit être soudé à la paroi radialement intérieure de la zone 92, correspondant aussi au fond dé la gorge d'allègement 7. Entre la gorge de montage 5 et cette zone de liaison à un disque 92, on a axialement successivement un premier décrochement 94, une zone 91 de diminution sensiblement régulière du diamètre sous la portée d'appui 6 et un décrochement dirigé vers l'extérieur 93. Les deux décrochements circonférentiels 94 et 93 ont pour but de bloquer axialement la seconde structure 95 après sa mise en place autour de la première. La seconde structure 95 comprend une portée d'appui 6 et cinq voiles d'appui contre la zone 91 : 96, 97, 98, 99 et 100. L'extrémité radialement intérieure des voiles 96 et 100 est adaptée pour épouser la forme des parois extérieures des décrochements 94 et 93 et venir bloquer axialement la seconde structure.

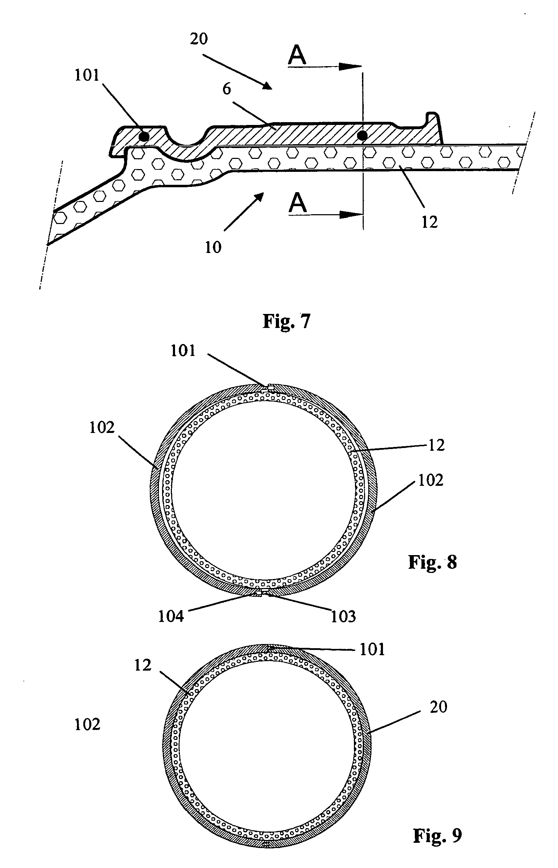

La figure 7 présente un agrandissement de la partie centrale de la jante de roue de la figure 1 pour illustrer un exemple de moyens d'assemblage 101 des éléments de support 102 de la seconde structure 20 sur la première 10.

Les figures 8 et 9 sont des coupes circonférentielles AA de la jante de roue tel qu'indiqué à la figure 7. A la figure 8, on voit deux éléments de support 102 avant leur assemblage autour de la partie 12 de la première structure 10. Chaque élément de support comprend des moyens d'assemblage 101 constitués ici par une partie mâle 103 et une partie femelle 104 placées aux deux extrémités de chaque élément. A la figure 9, la seconde structure 20 est constituée par l'assemblage des deux éléments de support 102. Les parties mâle 103 et femelles 104 sont enfilées les unes dans les autres. Il est à noter que des moyens d'assemblage comme ceux-ci sont suffisants en raison des faibles contraintes d'extension subies en service en raison de la présence d'un anneau de soutien tout autour.

Bien entendu, les éléments de support, ici demi circonférentiels, peuvent aussi être dimensionnés pour le tiers d'une circonférence. Au-delà, on constate que l'assemblage devient plus long à réaliser.

Comme les exemples précédents l'ont déjà indiqué, il est possible de compléter la mise en place de la seconde structure sur la première par divers moyens tels le clipage, la présence de butées de blocage, le collage...

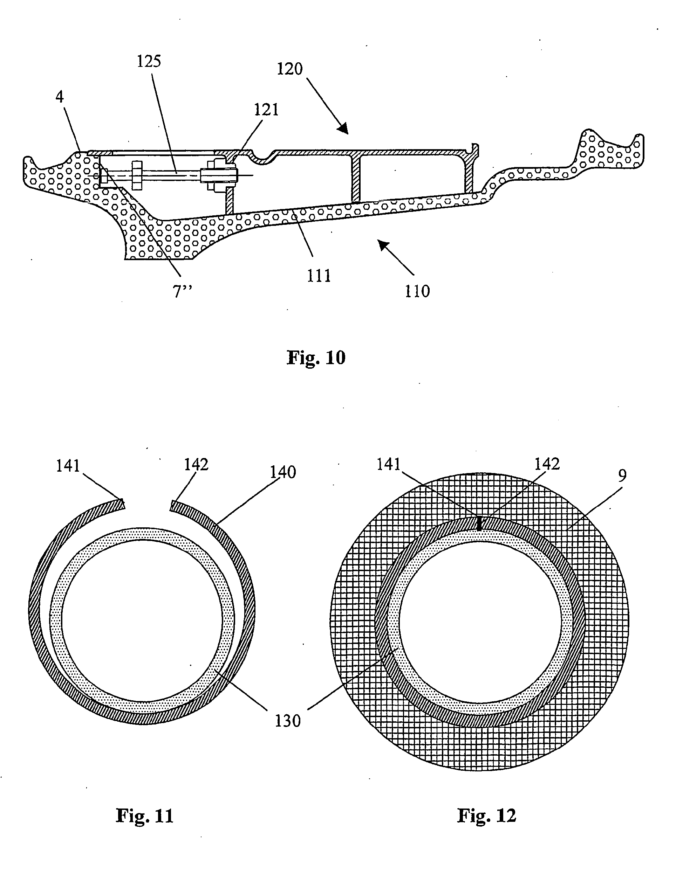

La figure 10 présente un second principe de fixation d'une seconde structure 120 autour d'une structure métallique 110. Sur cette figure, le principe de fixation de la seconde structure à la structure métallique utilise le principe du serrage conique. Les différents éléments de support constituant la seconde structure 120 sont préalablement assemblés entre eux autour de la première structure métallique de manière à former un ensemble monobloc. La seconde structure peut alors être repoussé par l'intermédiaire d'une ou de plusieurs vis 125 sur le cône formé par la surface 111. La ou les vis 125 prennent appui sur le flanc extérieur 7" de la gorge d'allègement pour repousser le voile 121 de la seconde structure 120. Des dispositifs 125 appropriés sont bien connus de l'homme du métier. Pour un certain couple appliqué sur la ou les vis 125, la seconde structure 120 est ainsi bloquée sur la première structure métallique. Ce système permet en outre de rattraper les différents jeux possibles liés au différentes tolérances d'usinage et/ou de fabrication de la structure métallique et des éléments de support constituant la seconde structure.

Les figures 11, 12 et 13 présentent, en coupe circonférentielle, un exemple d'un autre mode de réalisation d'une seconde structure selon l'invention dans lequel cette seconde structure est cylindrique et ouverte selon l'une de ses génératrices. Cette seconde structure est ainsi en forme d'anneau ouvert. Ces coupes circonférentielles sont des coupes AA tel qu'indiqué à la figure 7.

Cette seconde structure peut être facilement disposée autour de la première structure grâce à son élancement et sa souplesse. A la figure 11, on voit une première structure 130 avec disposée autour une seconde structure 140 en forme d'anneau ouvert. Les deux lèvres 141 et 142 de l'ouverture de l'anneau 140 sont largement écartées pour permettre sa mise en place.

La figure 12 présente la même jante de roue après enfilage d'un anneau de soutien de bande de roulement 9 tout autour de la seconde structure 140. On constate que les lèvres 141 et 142 sont collées l'une à l'autre en raison du frettage réalisé par l'anneau 9.

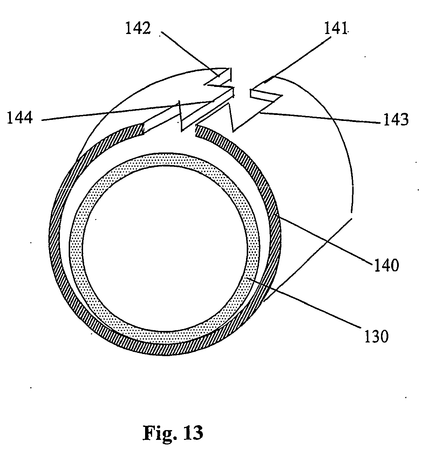

A la figure 13, on voit un exemple schématique de moyens d'assemblage des lèvres 141 et 142 de la seconde structure 140 pour faciliter le maintien en position de celle-ci sur la première structure 130. Ces moyens d'assemblage sont ici en forme de tenon mortaise 142-143 pour permettre le clipage en position de cette seconde structure.

Les diverses jantes de roue composées d'une première et d'une seconde structure présentées ont une portée d'appui qui peut s'adapter aisément à toutes les largeurs axiales envisageables pour les anneaux de soutien de bande de roulement. Des exemples de tels anneaux de soutien appropriés sont présentés dans les documents WO 00/05083 et WO 01/08905.

Les modes de réalisation décrits ci-dessus n'ont été fournis qu'à titre d'exemples non limitatifs et pourront recevoir toutes modifications désirables sans sortir pour cela du cadre de l'invention seulement limité par les revendications annexées.

## Revendications

1. Jante de roue (1) dont la géométrie radialement extérieure comporte un siège extérieur (2) et un siège intérieur (2') de jante, au moins le siège extérieur de jante ayant une génératrice dont l'extrémité axialement extérieure est sur un cercle de diamètre inférieur au diamètre du cercle sur lequel se trouve l'extrémité axialement intérieure, ledit siège extérieur de jante étant prolongé axialement à l'extérieur par une saillie (3) ou hump de faible hauteur, et axialement à l'intérieur par un rebord (4), une portée d'appui (6) sensiblement cylindrique de révolution pour recevoir un anneau de soutien de bande de roulement, et dont la géométrie radialement intérieure a un diamètre qui n'augmente pas entre ledit siège intérieur (2') et la zone de liaison à un disque (8), constituée par l'assemblage :
- d'une première structure métallique (10, 30, 50, 70, 80, 90, 110, 130) constituant la géométrie radialement intérieure de ladite jante ainsi qu'au moins une partie de la géométrie radialement extérieure de ladite jante ; et
- d'une seconde structure (140) destinée à constituer radialement extérieurement ladite portée d'appui (6),
**caractérisée en ce que** ladite seconde structure (140) est constituée d'une pièce cylindrique et ouverte sur l'une des ses génératrices.

2. Jante de roue selon la revendication 1, dans laquelle les lèvres de l'ouverture de ladite seconde structure (140) sont inclinées en biais relativement à la direction axiale.

3. Jante de roue (1) dont la géométrie radialement extérieure comporte un siège extérieur (2) et un siège intérieur (2') de jante, au moins le siège extérieur de jante ayant une génératrice dont l'extrémité axialement extérieure est sur un cercle de diamètre inférieur au diamètre du cercle sur lequel se trouve l'extrémité axialement intérieure, ledit siège extérieur de jante étant prolongé axialement à l'extérieur par une saillie (3) ou hump de faible hauteur, et axialement à l'intérieur par un rebord (4), une portée d'appui (6) sensiblement cylindrique de révolution pour recevoir un anneau de soutien de bande de roulement, et dont la géométrie radialement intérieure a un diamètre qui n'augmente pas entre ledit siège intérieur (2') et la zone de liaison à un disque (8), constituée par l'assemblage :
- d'une première structure métallique (10, 30, 50, 70, 80, 90, 110) constituant la géométrie radialement intérieure de ladite jante ainsi qu'au moins une partie de la géométrie radialement extérieure de ladite jante ; et
- d'une seconde structure (20, 40, 60, 75, 85, 95, 120) destinée à constituer radialement extérieurement ladite portée d'appui (6),
**caractérisée en ce que** ladite seconde structure est constituée par l'assemblage circonférentiel d'au moins deux éléments de support venant en appui sur la paroi radialement extérieure de ladite première structure métallique.

4. Jante de roue selon l'une des revendications 1 à 3, dans laquelle, ladite jante comportant en plus une gorge de montage (5) avec un flanc intérieur (5") et un flanc extérieur (5'), la paroi radialement intérieure de ladite première structure métallique (10, 30, 70, 80) comprend axialement extérieurement relativement au flanc extérieur (5') de ladite gorge de montage (5) une zone sensiblement cylindrique de révolution (12, 33) s'étendant axialement du flanc extérieur (5') de ladite gorge de montage (5) à l'extrémité extérieure de ladite portée d'appui (6).

5. Jante de roue selon la revendication 4, dans laquelle ladite seconde structure (20) est une structure annulaire d'épaisseur sensiblement constante dont la paroi radialement intérieure est sensiblement cylindrique de révolution et dans laquelle l'ensemble de cette paroi radialement intérieure et en regard de la portée d'appui (6) est en contact avec la paroi radialement extérieure de la première structure métallique (10).

6. Jante de roue selon l'une des revendications 1 à 3, dans laquelle la première structure métallique (50, 90, 110) présente, entre ledit siège intérieur (2') et la zone de liaison au disque (8), une paroi dont le diamètre axial diminue continûment.

7. Jante de roue selon l'une des revendications 1 à 4 et 6, dans laquelle ladite seconde structure (40, 60, 85, 95) comprend en plus au moins deux voiles circonférentiels (41, 42, 61-64, 89, 89', 96-100) s'étendant radialement intérieurement de ladite portée d'appui (6) et servant d'appui contre la paroi radialement extérieure de ladite première structure métallique (30, 50, 80, 90).

8. Jante de roue selon l'une des revendications 1 à 7, dans laquelle l'extrémité axialement intérieure de ladite seconde structure (20, 40, 75, 85, 95) constitue le flanc extérieur (5") de ladite gorge de montage (5).

9. Jante de roue selon les revendications 4 et 8, dans laquelle ladite zone sensiblement cylindrique de révolution de ladite première structure (30) a, au niveau de ladite portée d'appui (6), un diamètre inférieur avec un décrochement (31) placé au niveau de l'extrémité extérieure (5") de la gorge de montage (5) adapté pour bloquer axialement intérieurement l'extrémité axialement intérieure de ladite seconde structure (40).

10. Jante de roue selon l'une des revendications 1 à 9, dans laquelle ladite seconde structure (40, 75, 85) comporte en plus une zone sensiblement cylindrique de révolution (43-44, 76-77, 86, 88) prolongeant axialement extérieurement ladite portée d'appui (6) et adaptée pour coopérer avec le flanc intérieur du rebord du siège extérieur de ladite première structure métallique (30, 70, 80) pour supporter ladite seconde structure et la bloquer axialement extérieurement.

11. Jante de roue selon la revendication 10, dans laquelle, ledit rebord dudit siège extérieur ayant un flanc intérieur, ladite seconde structure (40, 75, 120) est bloquée axialement par des moyens de blocage prenant appui d'une part contre ledit flanc intérieur (7") du rebord (4) dudit siège extérieur (2) de ladite première structure métallique (30, 70, 110) et d'autre part contre un voile (45, 78, 121) sensiblement circonférentiel de ladite seconde structure.

12. Jante de roue selon la revendication 11, dans laquelle lesdits moyens de blocage sont un système vis cône (125).

13. Jante de roue selon l'une des revendications 10 à 12, dans laquelle la paroi extérieure de la zone cylindrique de révolution complémentaire de la seconde structure comprend une zone (43, 76, 86) de diamètre inférieur au diamètre extérieur du rebord adjacent au siège extérieur.

14. Jante de roue selon l'une des revendications 1 à 13, dans laquelle ladite seconde structure est fixée autour de ladite première structure par des moyens choisis dans le groupe des clips, soudures, colles et ancrages mécaniques.

15. Jante de roue selon l'une des revendications 1 à 14, dans laquelle ladite portée d'appui (6) comprend une gorge circonférentielle (6") destinée à bloquer axialement ledit anneau de soutien.

16. Jante de roue selon la revendication 15, dans laquelle ladite première structure métallique (10, 70, 80) comprend une gorge circonférentielle correspondant à celle de ladite zone cylindrique de révolution de ladite seconde structure (20, 75, 85) et destinée à bloquer axialement ladite seconde structure.

## Claims

1. Wheel rim (1) whose radially exterior geometry comprises an outer rim seat (2) and an inner rim seat (2'), at least the outer rim seat having a generatrix whose axially outer end lies on a circle of diameter smaller than the diameter of the circle on which the axially inner end lies, the said outer rim seat being extended axially outwards by a projection (3) or hump of small height, and axially inwards by a flange (4), a bearing surface (6) essentially formed as a cylinder of revolution designed to receive a tyre tread support ring, and whose radially interior geometry has a diameter which does not increase between the said inner seat (2') and the zone of connection to a wheel disc (8), which is made up by assembling:
- a first, metallic structure (10, 30, 50, 70, 80, 90, 110, 130) which constitutes the radially interior geometry of the said rim and at least part of the radially exterior geometry of the said rim; and
- a second structure (140) designed to constitute the said bearing surface (6) radially on the outside,
**characterised in that**
the said second structure (140) consists of a cylindrical component open along one of its generatrices.

2. Wheel rim according to Claim 1, in which the lips of the opening of the said second structure (140) are inclined obliquely relative to the axial direction.

3. Wheel rim (1) whose radially exterior geometry comprises an outer rim seat (2) and an inner rim seat (2'), at least the outer rim seat having a generatrix whose axially outer end lies on a circle of smaller diameter than the diameter of the circle on which the axially inner end lies, the said outer rim seat being extended axially outwards by a projection (3) or hump of small height and axially inwards by a flange (4), a bearing surface (6) essentially formed as a cylinder of revolution designed to receive a tyre tread support ring, and whose radially interior geometry has a diameter which does not increase between the said inner seat (2') and the zone of connection to a wheel disc (8), which is made up by assembling:
- a first, metallic structure (10, 30, 50, 70, 80, 90, 110) constituting the radially interior geometry of the said rim and at least part of the radially exterior geometry of the said rim; and
- a second structure (20, 40, 60, 75, 85, 95, 120) designed to constitute the said bearing surface (6) radially on the outside,
**characterised in that**
the said second structure consists of the circumferential assembly of at least two support elements which make contact with the radially outer wall of the said first, metallic structure.

4. Wheel rim according to any of Claims 1 to 3, in which the said rim also comprises a mounting groove (5) with an inner sidewall (5") and an outer sidewall (5'), and the radially inner wall of the said first, metallic structure (10, 30, 70, 80) comprises, axially on the outside relative to the outer sidewall (5') of the said mounting groove (5), a zone formed essentially as a cylinder of revolution (12, 33) which extends axially from the outer sidewall (5') of the said mounting groove (5) to the outer end of the said bearing surface (6).

5. Wheel rim according to Claim 4, in which the second structure (20) is an annular structure of substantially constant thickness whose radially inner wall is essentially formed as a cylinder of revolution and in which the whole of this radially inner wall on the opposite side to the bearing surface (6) is in contact with the radially outer wall of the first, metallic structure (10).

6. Wheel rim according to any of Claims 1 to 3, in which the first, metallic structure (50, 90, 110) has a wall between the said inner seat (2') and the disc connection zone (8), whose axial diameter decreases continuously.

7. Wheel rim according to one of Claims 1 to 4 and 6, in which the second structure (40, 60, 85, 95) also comprises at least two circumferential fins (41, 42, 61 to 64, 89, 89', 96 to 100) which extend radially inwards from the said bearing surface (6) and serve to support it against the radially outer wall of the said first, metallic structure (30, 50, 80, 90).

8. Wheel rim according to any of Claims 1 to 7, in which the axially inner end of the said second structure (20, 40, 75, 85, 95) constitutes the outer sidewall (5") of the said mounting groove (5).

9. Wheel rim according to Claims 4 and 8, in which the said zone formed essentially as a cylinder of revolution of the said first structure (30) has, at the level of the said bearing surface (6), a smaller diameter with a step (31) located at the level of the outer end (5") of the mounting groove (5), which is designed to block the axially inner end of the second structure (40) axially on the inside.

10. Wheel rim according to any of Claims 1 to 9, in which the said second structure (40, 75, 85) also comprises a zone formed essentially as a cylinder of revolution (43-44, 76-77, 86, 88) which extends the said bearing surface (6) axially outwards and is designed to cooperate with the inner sidewall of the flange of the outer seat of the said first, metallic structure (30, 70, 80) to support the said second structure and lock it axially on the outside.

11. Wheel rim according to Claim 10, in which the said flange of the said outer seat has an inner sidewall, and the said second structure (40, 75, 120) is axially locked by blocking means in contact on the one hand against the said inner sidewall (7") of the flange (4) of the said outer seat (2) of the said first, metallic structure (30, 70, 110) and on the other hand against an essentially circumferential fin (45, 78, 121) of the said second structure.

12. Wheel rim according to Claim 11, in which the said blocking means consist of a screw-and-cone system (125).

13. Wheel rim according to any of Claims 10 to 12, in which the outer wall of the complementary cylinder of revolution zone of the second structure comprises a zone (43, 76, 86) of diameter smaller than the outer diameter of the flange adjacent to the outer seat.

14. Wheel rim according to any of Claims 1 to 13, in which the said second structure is fixed around the said first structure by means chosen from the group comprising clips, welds, adhesives and mechanical anchoring means.

15. Wheel rim according to any of Claims 1 to 14, in which the said bearing surface (6) comprises a circumferential groove (6") designed to lock the said support ring axially.

16. Wheel rim according to Claim 15, in which the said first, metallic structure (10, 70, 80) comprises a circumferential groove corresponding to that of the said cylindrical revolution zone of the said second structure (20, 75, 85) designed to lock the said second structure axially.

## Patentansprüche

1. Radfelge (1), deren radial äußere Geometrie einen äußeren Felgensitz (2) und einen inneren Felgensitz (2'), wobei mindestens der äußere Felgensitz eine Mantellinie hat, deren axial äußeres Ende sich auf einem Kreis mit einem geringeren Durchmesser als der Durchmesser des Kreises befindet, auf dem sich das axial innere Ende befindet, wobei der äußere Felgensitz axial nach außen von einem Vorsprung (3) oder Hump geringer Höhe und axial nach innen von einer Randleiste (4) verlängert wird, und eine im Wesentlichen drehzylindrische Auflagefläche (6) zur Aufnahme eines Laufflächen-Stützrings aufweist, und deren radial innere Geometrie einen Durchmesser hat, der zwischen dem inneren Felgensitz (2') und der Verbindungszone mit einer Scheibe (8) nicht zunimmt, bestehend aus dem Zusammenbau:
- einer ersten metallischen Struktur (10, 30, 50, 70, 80, 90, 110, 130), die die radial innere Geometrie der Felge sowie mindestens einen Teil der radial äußeren Geometrie der Felge bildet; und
- einer zweiten Struktur (140), die dazu bestimmt ist, radial außen die Auflagefläche (6) zu bilden,
**dadurch gekennzeichnet, dass** die zweite Struktur (140) aus einem zylindrischen und auf einer seiner Mantellinien offenen Bauteil besteht.

2. Radfelge nach Anspruch 1, bei der die Lippen der Öffnung der zweiten Struktur (140) bezüglich der axialen Richtung schräg geneigt sind.

3. Radfelge (1), deren radial äußere Geometrie einen äußeren Felgensitz (2) und einen inneren Felgensitz (2'), wobei mindestens der äußere Felgensitz eine Mantellinie hat; deren axial äußeres Ende sich auf einem Kreis mit einem geringeren Durchmesser als der Durchmesser des Kreises befindet, auf dem sich das axial innere Ende befindet, wobei der äußere Felgensitz axial nach außen von einem Vorsprung (3) oder Hump geringer Höhe und axial nach innen von einer Randleiste (4) verlängert wird, und eine im Wesentlichen drehzylindrische Auflagefläche (6) zur Aufnahme eines Laufflächen-Stützrings aufweist, und deren radial innere Geometrie einen Durchmesser hat, der zwischen dem inneren Sitz (2') und der Verbindungszone mit einer Scheibe (8) nicht zunimmt, bestehend aus dem Zusammenbau:
- einer ersten metallischen Struktur (10, 30, 50, 70, 80, 90, 110), die die radial innere Geometrie der Felge sowie mindestens einen Teil der radial äußeren Geometrie der Felge bildet; und
- einer zweiten Struktur (20, 40, 60, 75, 85, 95, 120), die dazu bestimmt ist, radial außen die Auflagefläche (6) zu bilden,
**dadurch gekennzeichnet, dass** die zweite Struktur aus dem Umfangszusammenbau von mindestens zwei Stützelementen besteht, die auf der radial äußeren Wand der ersten metallischen Struktur in Auflage kommen.

4. Radfelge nach einem der Ansprüche 1 bis 3, bei der, da die Felge zusätzlich eine Montagerille (5) mit einer Innenflanke (5") und einer Außenflanke (5') aufweist, die radial innere Wand der ersten metallischen Struktur (10, 30, 70, 80) axial außen bezüglich der Außenflanke (5') der Montagerille (5) eine im Wesentlichen drehzylindrische Zone (12, 33) aufweist, die sich axial von der Außenflanke (5') der Montagerille (5) zum äußeren Ende der Auflagefläche (6) erstreckt.

5. Radfelge nach Anspruch 4, bei der die zweite Struktur (20) eine ringförmige Struktur mit einer im Wesentlichen konstanten Dicke ist, deren radial innere Wand im Wesentlichen drehzylindrisch ist, und bei der die Gesamtheit dieser radial inneren und der Auflagefläche (6) gegenüberliegenden Wand mit der radial äußeren Wand der ersten metallischen Struktur (10) in Kontakt ist.

6. Radfelge nach einem der Ansprüche 1 bis 3, bei der die erste metallische Struktur (50, 90, 110) zwischen dem inneren Sitz (2') und der Verbindungszone mit der Scheibe (8) eine Wand aufweist, deren axialer Durchmesser kontinuierlich abnimmt.

7. Radfelge nach einem der Ansprüche 1 bis 4 und 6, bei der die zweite Struktur (40, 60, 85, 95) zusätzlich mindestens zwei Umfangsschürzen (41, 42, 61-64, 89, 89', 96-100) aufweist, die sich radial innerhalb der Auflagefläche (6) erstrecken und als Auflage gegen die radial äußere Wand der ersten metallischen Struktur (30, 50, 80, 90) dienen.

8. Radfelge nach einem der Ansprüche 1 bis 7, bei der das axial innere Ende der zweiten Struktur (20, 40, 75, 85, 95) die Außenflanke (5") der Montagerille (5) bildet.

9. Radfelge nach den Ansprüchen 4 und 8, bei der die im Wesentlichen drehzylindrische Zone der ersten Struktur (30) in Höhe der Auflagefläche (6) einen unteren Durchmesser mit einem Absatz (31) aufweist, der in Höhe des äußeren Endes (5") der Montagerille (5) angeordnet und geeignet ist, um axial innen das axial innere Ende der zweiten Struktur (40) zu blockieren.

10. Radfelge nach einem der Ansprüche 1 bis 9, bei der die zweite Struktur (40, 75, 85) zusätzlich eine im Wesentlichen drehzylindrische Zone (43-44, 76-77, 86, 88) aufweist, die die Auflagefläche (6) axial nach außen verlängert und geeignet ist, um mit der Innenflanke der Randleiste des äußeren Sitzes der ersten metallischen Struktur (30, 70, 80) zusammenzuwirken, um die zweite Struktur zu stützen und sie axial außen zu blockieren.

11. Radfelge nach Anspruch 10, bei der, da die Randleiste des äußeren Sitzes eine Innenflanke hat, die zweite Struktur (40, 75, 120) axial von Blockiermitteln blockiert wird, die einerseits gegen die Innenflanke (7") der Randleiste (4) des äußeren Sitzes (2) der ersten metallischen Struktur (30, 70, 110) und andererseits gegen eine im Wesentlichen in Umfangsrichtung verlaufende Schürze (45, 78, 121) der zweiten Struktur anliegen.

12. Radfelge nach Anspruch 11, bei der die Blockiermittel ein System aus Schraube und Kegel (125) sind.

13. Radfelge nach einem der Ansprüche 10 bis 12, bei der die Außenwand der komplementären drehzylindrischen Zone der zweiten Struktur eine Zone (43, 76, 86) mit einem geringeren Durchmesser als der Außendurchmesser der dem äußeren Sitz benachbarten Randleiste aufweist.

14. Radfelge nach einem der Ansprüche 1 bis 13, bei der die zweite Struktur um die erste Struktur herum durch Mittel befestigt ist, die aus der Gruppe der Clips, Schweißnähte, Kleber und mechanischen Verankerungen ausgewählt wird.

15. Radfelge nach einem der Ansprüche 1 bis 14, bei der die Auflagefläche (6) eine Umfangsrille (6") aufweist, die dazu bestimmt ist, den Stützring axial zu blockieren.

16. Radfelge nach Anspruch 15, bei der die erste metallische Struktur (10, 70, 80) eine Umfangsrille aufweist, die derjenigen der drehzylindrischen Zone der zweiten Struktur (20, 75, 85) entspricht und dazu bestimmt ist, die zweite Struktur axial zu blockieren.
